# EUROPEAN PATENT APPLICATION

(11) **EP 1 126 400 A2**
(43) Date of publication of application: **22.08.2001**
(21) Application number: 00106825.3
(22) Date of filing: 30.03.2000
(51) Int. Cl.: G06K 7/10

(54) **Transponder, mobile communication terminal, embedded type communication device, and storage medium having a control-transfer program**

(30) Priority: 16.02.2000 JP 2000038406
(71) Applicant: Yozan Inc., Tokyo 155-0031 (JP)
(72) Inventor: Takatori, Sunao, c/o Yozan Inc.,, Tokyo 155-0031 (JP)
(74) Representative: Grünecker, Kinkeldey, Stockmair & Schwanhäusser Anwaltssozietät

(57) **Abstract**

A transponder, a mobile communication terminal, an embedded type communication device, and a storage medium having a control-transfer program, which are capable of performing an accurate accounting on the occasion of utilizing an internet. The embedded type communication device comprises signal transmitting/receiving means for transmitting a request for information to a transponder and receiving an ID peculiar to the subscriber line from the transponder, and controlling means for controlling an establishment of a communication line between a user and a service provider by making use of the subscriber line corresponding with the ID received by the transmitting/receiving means. The controlling means controls the communication between the PC1 connected with the controlling means and the service provider.

## Description

### BACKGROUND OF THE INVENTION

The present invention relates to a transponder, a mobile communication terminal, an embedded type communication device, and a storage medium having a control-transfer program, and in particular to a transponder, a mobile communication terminal, an embedded type communication device, and a storage medium having a control-transfer program, which are capable of performing an accurate accounting on the occasion of utilizing a communication network such as an internet.

With an increasing development of information communication network such as an internet, it is now possible for users to enjoy various services through a mobile communication terminal such as a portable telephone, a PHS (Personal Handy System), a PDA (Personal Digital Assistant), etc.

In conformity with an expanding service of various kinds, means which is available for users in taking part in the information communication network is expected to expand from the aforementioned mobile communication terminals and personal computers to home electronic equipment such as a television.

In future, most of electronic equipment are highly expected to have capabilities to provide, through an information communication line, various kinds of information from a service provider, or to make it possible to perform the purchase or lending of commercial goods. In such a situation, the importance regarding the recognition of client would be more and more increased. For example, in a situation where a commonly owned television installed in a meeting room of workshop is to be utilized by many and unspecified number of users, the determination of a person to whom the cost of the provided service should be charged would become difficult.

On the other hand, during the time when a user activates in the outdoors, a mobile communication terminal is widely utilized mainly as a telephone by the user. However, the mobile communication terminal is now accompanied with problems due to an increasing trend of miniaturization thereof. Namely, it is desired to improve such matters that the input key tends to be erroneously operated, that the memory capacity and display region are rather limited, and that the controllability of power saving is not sufficient.

Meanwhile, in order to avoid the aforementioned problems, it is preferable that users can utilize a suitable electronic equipment when they are staying indoors such as their home or workshop for enabling them to fully enjoy the aforementioned various services. However, there is a problem in such a case that not only the mobile communication terminal but also the electronic equipment are required to be provided with a subscriber line. For example, when a user wants to know a data concerning stock prices by making use of a mobile communication terminal, a detailed data such as a line graph cannot be identified or displayed due to a limited display region of the mobile communication terminal. Therefore, when the user wants to display such a detailed data on a large screen of the television in his home, the television is also required to be provided with its own subscriber line.

### BRIEF SUMMARY OF THE INVENTION

Therefore, an object of the present invention is to provide a transponder, a mobile communication terminal, an embedded type communication device, and a storage medium having a control-transfer program, which are capable of performing an accurate accounting on the occasion of utilizing a communication network such as an internet, thus enabling it to further enhance the services to the users.

With a view to realize the aforementioned object, there is provided according to the present invention a transponder which comprises receiving means for receiving a request for information from an interrogator, and transmitting means for transmitting a characteristic information peculiar to the subscriber line to said interrogator in response to the request received by said receiving means.

By providing a mobile communication terminal with such a transponder, it becomes possible to expediently use the mobile communication terminal according to circumstances. Namely, when the user is gone outdoors, the mobile communication terminal can be utilized as a telephone, whereas when the user stays indoors, the subscriber line of the mobile communication terminal can be utilized for receiving various services of internet through a suitable electronic equipment in his home or workshop.

As another aspect, the present invention also provides an embedded type communication device which comprises transmitting means for transmitting a request for information to a transponder, receiving means for receiving a characteristic information peculiar to the subscriber line from said transponder, and controlling means for controlling an establishment of a communication line between a user and a service provider by making use of the subscriber line corresponding with said characteristic information received by said receiving means.

This controlling means is designed to control the communication between the service provider and an electronic equipment that has been connected via the communication line with the controlling means so as to enable the embedded type communication device to allow the use of the electronic equipment with said transponder provided with said characteristic information being assigned as an object of charge. Further, even if said electronic equipment is approached by many and unspecified number of users each having the aforementioned transponder, a person to whom the cost is to be charged can be identified.

As a further aspect, the present invention also provides a computer-readable storage medium having a program stored thereon for enabling the computer to be functioned as an embedded type communication device comprising transmitting means for transmitting a request for information to a transponder, receiving means for receiving a characteristic information peculiar to the subscriber line from said transponder, and controlling means for controlling an establishment of a communication line between a user and a service provider by making use of the subscriber line corresponding with said characteristic information received by said receiving means.

### BRIEF DESCRIPTION OF THE SEVERAL VIEWS OF THE DRAWING

FIG. 1 is a schematic view illustrating a concept of a communication system which is provided with a transponder and an embedded type communication device according to one embodiment of the present invention;
FIG. 2 is a block diagram showing the construction of the embedded type communication device according to one embodiment of the present invention;
FIG. 3 is a block diagram illustrating the function of the embedded type communication device according to one embodiment of the present invention;
FIG. 4 is a table showing one example of history of utilization; and
FIG. 5 is a flow chart illustrating the operation of a communication system which is provided with a transponder and an embedded type communication device according to one embodiment of the present invention.

### DETAILED DESCRIPTION OF THE INVENTION

The present invention will be further explained with reference to the drawings depicting one embodiment according to the present invention.

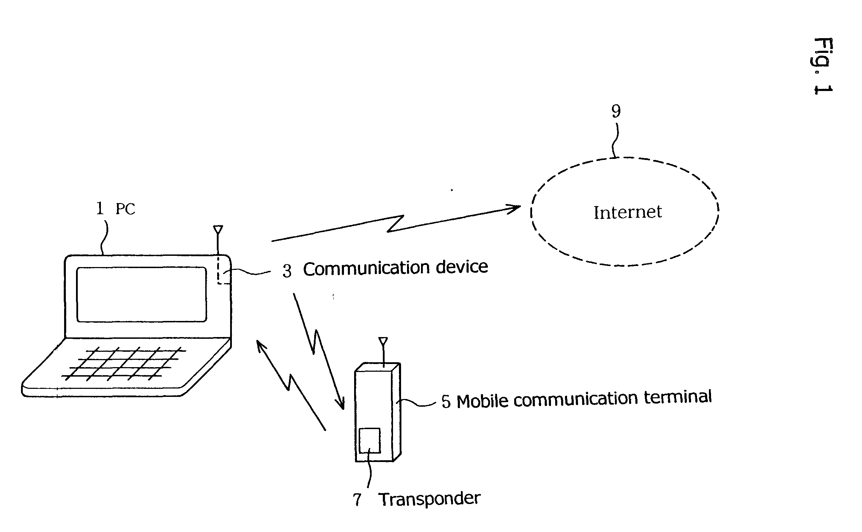

FIG. 1 schematically illustrates a concept of a communication system which is provided with a transponder and an embedded type communication device according to one embodiment of the present invention.

The embedded type communication device 3 (hereinafter, referred to as a communication device) according to this embodiment is constructed integral with an electronic equipment (in FIG. 1, a personal computer (PC) 1) for the purpose of performing a communication with an internet 9 in place of a mobile communication terminal 5.

Further, this communication device 3 is embedded inside the housing of the electronic equipment (PC1) and constructed integral with the electronic equipment through an electrical connection with a circuit for achieving the function of the electronic equipment itself, through an electrical connection, via an interface unit (not shown) such as a connector (and a plug socket), with a circuit for achieving the function of the electronic equipment itself, or through an electrical or electromagnetic connection, via a wire or wireless circuit (not shown), with a circuit for achieving the function of the electronic equipment itself and hence, allowing this communication device 3 to be spatially separated from the electronic equipment.

The communication system shown in FIG. 1 is composed of an electronic equipment such as PC1, the communication device 3 to be installed in the electronic equipment, the mobile communication terminal 5 in which the transponder 7 according to this embodiment is to be installed, and an information communication network such as the internet 9 for providing various information or providing various services on a chargeable or rental merchandise.

As for the electronic equipment for constituting the PC1, it may be an ordinary equipment to be utilized in an ordinary home. In this embodiment, the PC1 is constituted by a hardware which is capable of being connected with an information communication network such as the internet 9.

As mentioned above, the communication device 3 can be mounted electrically or electromagnetically integral with the PC1. In particular, the communication device 3 makes an inquiry as an interrogator for a characteristic information peculiar to the subscriber line of the mobile communication terminal 5, and then, based on the characteristic information transmitted from the mobile communication terminal 5, executes a control-transfer processing. In this embodiment, the ID is employed as a characteristic information peculiar to the subscriber line of the mobile communication terminal 5.

The mobile communication terminal 5 is a telephone having a subscriber line as in the case of a portable telephone, a PHS, a PDA, etc. According to this embodiment, the transponder 7 is mounted on the external surface thereof. This transponder 7 may be constituted by an interface such as an IC (Integrated Circuit), a bluetooth connector, etc.

This transponder 7 is designed to receive a request for information from the communication device 3, and to transmit an ID concerning the subscriber line in response to the request. The communication circuit for handling the ID is provided in separate from the ordinary subscriber line. Further, the operation related to the ID transmission of the transponder 7 is independent from that of the mobile communication terminal 5. The transmission/receiving of this ID will be explained in detail hereinafter.

Next, details on the aforementioned control-transfer processing will be explained. This control-transfer is intended to mean that the control of communication by the mobile communication terminal 5 in relative to the internet 9 is transferred to the communication device 3. This mobile communication terminal 5 is designed to feed the ID concerning the subscriber line to the communication device 3, which is then actuated to establish a subscriber line of the mobile communication terminal 5 between PC1 (the communication device 3) and the internet 9. On this occasion, the communication device 3 determines that the owner of the mobile communication terminal 5 is the person to whom the cost of the service of the internet 9 to be provided should be charged, and at the same time, permits the utilization of the PC1 to only this mobile communication terminal 5 (or the owner thereof). More specifically, the communication device 3 is controlled not to accept the IDs that have been transmitted from mobile communication terminals other than this mobile communication terminal 5.

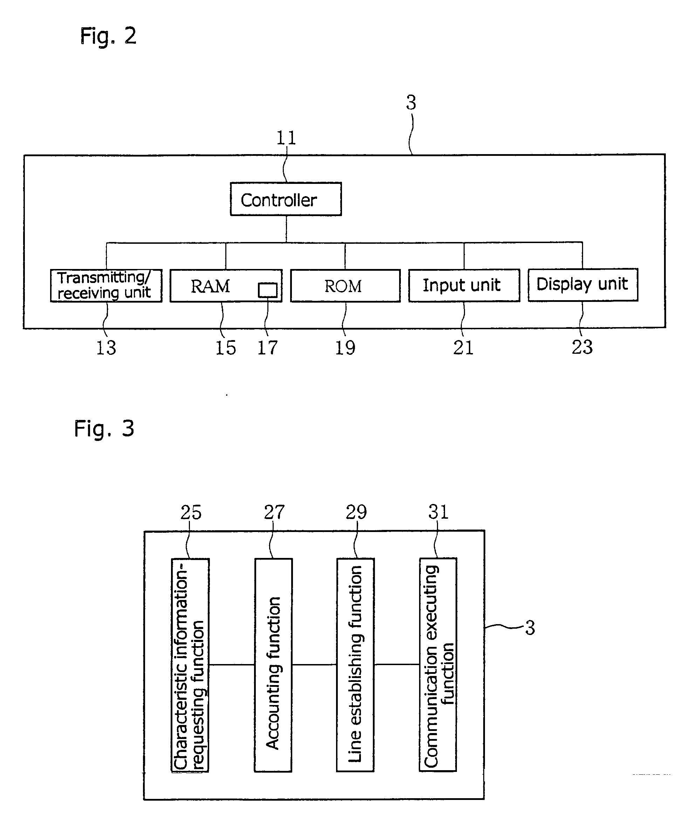

FIG. 3 is a block diagram illustrating the construction of the communication device 3 according to this embodiment. This communication device 3 is composed of a controller 11, a signal transmitting/receiving unit 13, a RAM 15, a ROM 19, an input unit 21 and a display unit 23.

The controller 11 is formed of a CPU which controls the entire operation of the communication device 3 of the present invention. In particular, the controlling of the communication of the signal transmitting/receiving unit 13 as well as the controlling (control-transfer processing) related to the charge are performed by this controller 11.

The signal transmitting/receiving unit 13 is designed to perform, on the basis of the instructions from the controller 11, the transmitting of an inquiry for ID and the receiving of ID, as well as a data-transmitting and receiving processing between a predetermined site of the internet 9 and the PC1 through the subscriber line of the mobile communication terminal 5.

The ROM 19 stores therein a program for instructing the operation of the communication device 3. On the other hand, the RAM 15 is designed to temporarily store therein a data which is required for the processing by the communication device 3. In particular, it is designed such that the utilization history about the PC1 can be stored in a history table 17.

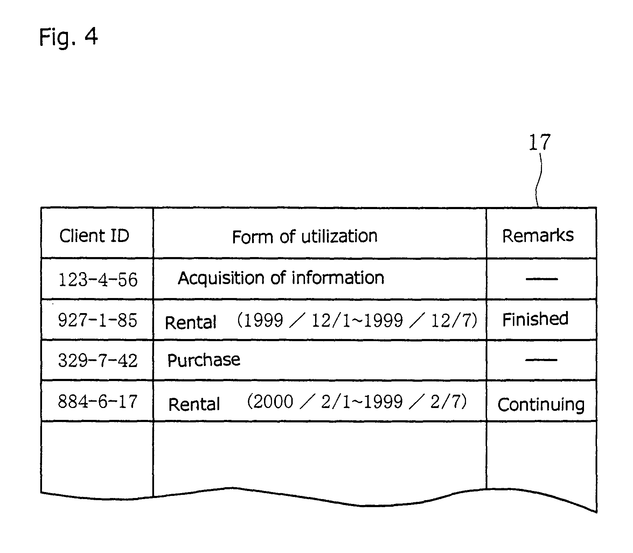

FIG. 4 shows a table illustrating one example of the history table 17. The forms of utilization of the PC1 with respect to the internet 9 are displayed together with the corresponding client ID in this history table 17.

For example, according the examples shown in FIG. 4, the form of utilization by the client of ID "123-4-56" is shown as being the "acquisition of information" related for example to the reference of stock information. On the other hand, the form of utilization by the client of ID "927-1-85" is shown as being the "rental" related for example to the software of a movie. There are also shown that the period of this rental is in the range of 1999/12/1 to 1999/12/7 and that the rental has been already finished as seen from the remarks column. Further, the form of utilization by the client of ID "329-7-42" is shown as being the "purchase" related for example to books. The contents of these registration can be suitably renewed by the controller 11.

The input unit 21 (see FIG. 2) is designed such that an input operation can be performed on the occasion of for instance the renewal of the history table 17. The data thus input is then converted into a key code so as to be fed to the controller 11. The display unit 23 is designed to convert the code data into a display data according to the instruction from the controller 11, the display data being subsequently displayed in the form of history table 17 for instance.

FIG. 3 is a block diagram illustrating the function of the communication device 3 shown in FIG. 2. This communication device 3 is provided with a characteristic information-requesting function 25, an accounting function 27, a line establishing function 29 and a communication executing function 31. These functions can be actuated based on the instructions from the controller 11.

With respect to the characteristic information-requesting function 25, the controller 11 is actuated to control the signal transmitting/receiving unit 13 so as to inquire the ID and then to receive the ID from the transponder 7. As for the format of inquiring the ID and of transmitting the ID from the transponder 7, it can be realized by a process wherein the ID inquiry is transmitted at every predetermined frequency by means of the controller 11 and the signal transmitting/receiving unit 13, and in response to this transmission of ID inquiry, the transponder 7 is actuated to reflect only the ID inquiry having a specific frequency, the reflected ID inquiry being subsequently identified by the controller 11.

With respect to the accounting function 27, the controller 11 is actuated to control the PC1 on the basis of the ID thus identified. For example, the controller 11 is actuated to enable the confirmed items related to the connection and utilization of the internet 9 to be displayed in the display unit (not shown) such as an LCD. Further, in accordance with the form of utilization of PC1 by the client of the mobile communication terminal 5, the confirmed items on the charge are enabled to be displayed in the aforementioned display unit. In the course of executing this function, the controller 11 is acted so as to perform the registration of the confirmed items in the history table 17 as shown in FIG. 4.

With respect to the line establishing function 29, the controller 11 is actuated to control the PC1 after finishing the processing of the accounting, function 27 so as to establish the subscriber line of the client in relative to the service provider conforming to the form of utilization selected by the client. For example, the controller 11 can be acted on the basis of the ID of the client to enable the PC1 to be connected with the internet 9 by making use of a modem (not shown) installed inside the PC1, thereby establishing a communication line between the PC1 and the site of the service provider to be determined according to the input of the client. In this case, the communication device 3 may be connected via the subscriber line with the site of the service provider, and thereafter, the communication between the PC1 and the internet 9 may be executed through this communication device 3.

With respect to the communication executing function 31, the controller 11 is actuated to watch the input of the client to the PC1. For example, the controller 11 is actuated to control the modem of the PC1 or the signal transmitting/receiving unit 13 according to the aforementioned form of utilization of the communication device 3, thereby executing the communication of data according to the input made by the client.

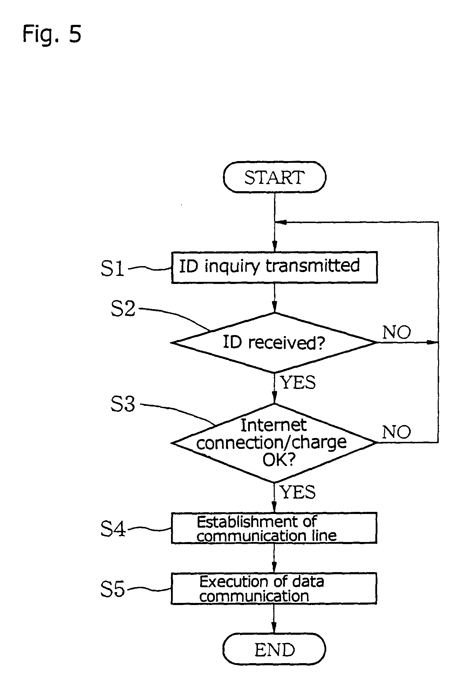

FIG. 5 is a flow chart illustrating the operation of a communication system which is provided with the transponder 7 and the communication device 3 according to this embodiment. FIG. 5 illustrates mainly the operation of the communication device 3.

First of all, in the step S1, the inquiry of ID is performed. In this case, only when the ID from the mobile communication terminal 5 is transmitted within a predetermined area which is detectable by the communication device 3, the ID can be received by the communication device 3. Then, in the step S2, a judgment is made as to whether or not the ID has been received by the communication device 3. When the ID is found not yet received by the communication device 3, the procedure is returned back to the step S1. On the other hand, when the ID is found received by the communication device 3, the procedure is advanced to the next step S3.

In the step S3, for allowing the utilization of service of the internet 9, the confirmation of the client who is the owner of the ID thus received is performed. This can be performed by a process wherein the confirmation items such as the connection of internet and the charge for the utilization of service are displayed in the display unit of the PC1 as mentioned above.

When the confirmation could not be obtained from the client within a predetermined period of time in the step S3, the procedure is returned to the step S1. Whereas when the confirmation could be obtained from the client within a predetermined period of time, the client is assumed as being a person to be charged and hence, the procedure is advanced to the step S4.

In the step S4, by making use of the subscriber line of the client, a communication line between the client and the site of service provider is established according to the input operation of the client. As mentioned above, the client whose is the owner of the mobile communication terminal 5 is enabled to access the site of predetermined service provider from the PC1 by making use of the established communication line. Since this communication line is the subscriber line of the client, the cost for the service of the internet 9 is charged by the service provider to the client.

In the step S5, the input operation of the client to the PC1 is watched to perform a data communication. For example, if the form of utilization exemplified in FIG. 4 is the "acquisition of information", the data transmitting/receiving processing for down-loading a requested data from the site accessed by the client is performed. On the other hand, if the form of utilization is the "rental", the data transmitting/receiving processing for determining the term and charge for the rental of the commodity to be rented is performed. Further, if the form of utilization is the "purchase", the data transmitting/receiving processing for determining the selection, price, delivery date, etc. of the commodity to be purchased is performed.

The information on the charge that has been generated in the procedure of the step S5 is transferred from the service provider to an administration server (not shown) who is assigned to concentratedly perform the accounting business, thereby allowing a bill to be sent to the client after a predetermined period of time.

As explained above, it is possible, by making use of the communication device 3 of the present invention, to accurately identify a person to be charged for the utilization of the internet 9 even when there are many and unspecified number of clients desiring to receive the service of the internet 9 by making use of the PC1. This has been realized by the provision of new additional functions (the communication device 3 and the transponder 7) to an electronic device such as the PC1 and to the mobile communication terminal 5.

Based on the aforementioned basic construction as set forth in the above embodiment of the present invention, it is possible to further modify the construction and/or operation of the above embodiment, thereby realizing the expansion of new function as explained below.

First of all, although the communication device 3 exemplified in the above embodiment is not a telephone which is contracted for subscription with a telecommunication enterprise (having a subscriber line), it is possible to install a program which is capable of instructing the operation as proposed by the present invention to an ordinary mobile communication terminal (portable telephone) having a subscriber line.

Further, although the transponder 7 exemplified in the above embodiment is attached to the mobile communication terminal 5 having a subscriber line, it may be attached to a card such as a magnetic/IC card, thereby enabling the owner of the card to utilize the internet 9 by making use of the PC1. Namely, it would be enough as long as the subscriber line is assigned to the transponder 7 itself and as long as the card is provided with a specific information (for example, ID) corresponding to the subscriber line.

Furthermore, the transponder 7 according to the present invention can be realized in the form of an analog circuit, a digital circuit, etc. If the transponder 7 is to be realized in the form of an analog circuit, it can be realized in the form of passive circuit (not shown) by suitably setting the values of resistance element, capacity element or induction element in such a manner that only the ID inquiry having a specific frequency among the ID inquiries each corresponding to each of plural frequencies transmitted from the communication device 3 can be reflected in the step S1 (see FIG. 5).

If the transponder 7 is to be realized in the form of an active circuit, it can be realized by mounting a power source (not shown) such as a dry cell and an amplifier (not shown) receiving the supply of power from this power source in the interior of the transponder 7 and by connecting the aforementioned passive circuit to the rear portions of these devices.

If the transponder 7 is to be realized in the form of a digital circuit, it can be realized by mounting, in the interior of the transponder 7, a power source (not shown) such as a dry cell as well as a register (not shown) which is designed to be provided with an ID upon receiving the supply of power from power source, and by transmitting the ID kept in the interior of the transponder 7 in response to the ID inquiry from the communication device 3 in the step S1.

In the above embodiment, the communication device 3 is connected with the PC1 which is adapted to be connected with the internet 9, thereby intermediating for various services such as the acquisition of information, the rental and purchase of commodities, etc. However, the electronic device in which the communication device 3 of the present invention is to be installed is not limited to the PC1.

For example, when the electronic device is a home telephone, it would become possible, by making use of the subscriber line of the mobile communication terminal 5, to make a telephone call from a home telephone having no subscriber line. Further, when the electronic device is a television, it would become possible to display information that has been obtained by making use of the subscriber line of the mobile communication terminal 5 on the screen of the television.

Furthermore, the communication device 3 of the present invention can be realized by way of a program which is capable of performing the function of the communication device 3. This program can be stored in a storage medium which is readable by a computer such as a CD-ROM.

The storage medium storing a program for executing the operation of the communication device 3 may be the ROM 19 itself which is shown in FIG. 2. Alternatively, the storage medium may be a CD-ROM which is readable as it is installed in a program readable device (not shown) such as a CD-ROM drive that can be mounted as an external memory device. Additionally, the storage medium may be a magnetic tape, a cassette tape, a floppy disk, a hard disk, an MO/MD/DVD, or a semiconductor memory.

It is now possible according to the present invention to perform an accurate accounting on the occasion of utilizing a communication network such as an internet, thus enabling it to further enhance the services to the users. This has been made possible by mounting a communication device on an electronic device to be used for the utilization of an internet, and by delivering, in a simple manner, a specific information between the communication device and the transponder.

## Claims

1. A transponder which comprises;
receiving means for receiving a request for information from an interrogator; and
transmitting means for transmitting a characteristic information peculiar to the subscriber line to said interrogator in response to the request received by said receiving means.

2. A mobile communication terminal which is provided with the transponder as claimed in claim 1.

3. An embedded type communication device which comprises transmitting means for transmitting a request for information to a transponder, receiving means for receiving a characteristic information peculiar to the subscriber line from said transponder, and controlling means for controlling an establishment of a communication line between a user and a service provider by making use of the subscriber line corresponding with said characteristic information received by said receiving means.

4. The embedded type communication device according to claim 3, wherein said controlling means is designed to control the communication between the service provider and an electronic equipment connected via the communication line with the controlling means.

5. A computer-readable storage medium having a program stored thereon for enabling the computer to operate as an embedded type communication device comprising transmitting means for transmitting a request for information to a transponder, receiving means for receiving a characteristic information peculiar to the subscriber line from said transponder, and controlling means for controlling an establishment of a communication line between a user and a service provider by making use of the subscriber line corresponding with said characteristic information received by said receiving means.
